(19)

**Europäisches Patentamt**

**European Patent Office**

**Office européen des brevets**

(11)  **EP 4 089 551 A1**

(12) **EUROPEAN PATENT APPLICATION**

(43) Date of publication:
**16.11.2022  Bulletin 2022/46**

(21) Application number: **21173273.0**

(22) Date of filing: **11.05.2021**

(51) International Patent Classification (IPC):
**G06F 17/11** (2006.01)     **G01H 17/00** (2006.01)
**G01M 7/00** (2006.01)

(52) Cooperative Patent Classification (CPC):
**G06F 17/11; G01M 7/025; G01M 17/007;**
G01H 1/00

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Industry Software NV**
**3001 Leuven (BE)**

(72) Inventors:
• **Yamada, Shuhei**
  **3000 Leuven (BE)**
• **Geluk, Theo**
  **4691 L Tholen (NL)**

(74) Representative: **Maier, Daniel Oliver**
**Siemens AG**
**Postfach 22 16 34**
**80506 München (DE)**

(54) **COMPUTER IMPLEMENTED METHOD OF DETERMINING A TRANSFER FUNCTION OF A MODULE OR A COMPONENT AND GENERATING SUCH COMPONENT**

(57)  The invention relates to a method of determining a transfer function (TRF) of a module (MDL). To improve accuracy of such methods the invention proposes the steps:

a. measuring a first set-of-sensors-output (SO1) applied to said module (MDL) and measuring a second set-of-sensors-output (SO2),

b. deducing a transfer function (TRF) of said module (MDL), wherein a transfer-function matrix (MTM) is a quadratic n-dimensional matrix for said n degrees of freedom (DOF),

c. selecting a submatrix (SBM),

d. determining for said selected submatrix (SBM) a corresponding rotational matrix (RTM) which improves the symmetry of the submatrix (SBM),

e. generating a main rotational matrix (MRM) to transform said main transfer-function matrix (MTM),

f. providing the transfer function (TRF) with said transformed transfer-function matrix (TTM).

FIG 1

FIG 1A

FIG 1B

FIG 1A

$$\underline{H}(\omega) = [\underline{K} - \omega^2 \underline{M}]^{-1}$$

EP 4 089 551 A1

# FIG 1B

**Description**

FIELD OF THE INVENTION

The invention relates to determining transfer functions - in particular frequency response functions - of modules of a component and of the component itself. Further, the invention relates to designing a component transfer functions by frequency based substructuring using a method of determining frequency response functions of modules as mentioned before and generating said component transfer functions.

Frequency Based Substructuring [FBS] - also called dynamic substructuring - is a method widely used in the industry for assembling module transfer functions, more specifically Frequency Response Functions [FRFs] to determine the complete component's dynamic behavior. Its advantages include:

> a) enabling rapid evaluation of the complete dynamic behavior of the component when changing individual modules, allowing for a faster design cycle,
> b) combining analytical/numerical model with measured module FRFs for hybrid analysis,
> c) convenient workaround if a component/module is difficult to measure.

BACKGROUND OF THE INVENTION

Most methods devised for FBS require matrix inversion of the measured FRF matrices which are involved in the coupling of individual modules.
The general expression of a FRF matrix referring to a steady state response to a harmonic excitation of an undamped multi-degree-of-freedom system may be written as:

$$\underline{M}\ddot{\underline{q}} + \underline{K}\dot{\underline{q}} = \underline{Q}(t)$$

Assuming harmonic excitation and response:

$$\underline{Q}(t) = Re\{\widehat{\underline{Q}}\, e^{j\omega t}\}$$

$$\underline{q}(t) = Re\{\widehat{\underline{q}}\, e^{j\omega t}\}$$

With: M=matrix of mass; K=matrix of stiffness; Q,q=force, motion. The FRF-matrix describes the system's behavior as a response to an excitation:

$$\underline{H}(\omega) = [\underline{K} - \omega^2 \underline{M}]^{-1}$$

As errors to the FRF introduced by means of motion and force measurement propagate during FBS, these errors become a major obstacle to obtaining accurate results.

Conventionally, solutions to the accuracy problems resulting from measurement inaccuracies being amplified by post measurement processing comprise the following approaches:

- Averaging of upper and lower triangle of the FRF-coupling matrices results in reciprocal coupling terms in the FRF matrix. This may suppress inversion problems, but it does not fundamentally solve the reason why upper and lower triangle components in the FRF matrix are non-reciprocal. The result can still be error prone, as the averaging result is fully dependent on the 'errors' made in either the upper or the lower triangle matrix;
- Removal of non-reciprocal terms in the coupling matrix may - as above - stabilize the inversion but does not solve the underlying problem;
- Fitting a model through the measured transfer function and imposing reciprocal behavior on this model to synthesize a reciprocal coupling matrix. As above, this can stabilize the inversion, but fully maintains the errors present in the coupling matrix. The coupling results are unlikely to be improved;
- From "Evaluation of the FRF based substructuring and modal synthesis technique applied to vehicle FE data, Jan 2000, K. Cuppens, P. Sas, L. Hermans" a fundamental FRF based substructuring methodology is known.
- "Road Noise assessment using component-based TPA for a tire, 2018, F. Bianciardi, J. Ortega Almiron, E. Risaliti, P. Corbeels" is a more recent reference on using FBS in context of component transfer path analysis [TPA] aiming to maximize the coupling quality;
- Further, Euler angle identification is done in literature, for example involving inertial measurement units (DC accelerometers, gyroscopes, magnetometers). This is known from e.g. "Diversified redundancy in the measurement of Euler angles using accelerometers and magnetometers, 2007, Chirag Jagadish; Bor-Chin Chang".

It is one object of the invention to improve the accuracy of module FRFs and the accuracy of FBS and to finally improve the quality of component FRF generated on basis of these procedures.

SUMMARY OF THE INVENTION

To avoid above referenced problems of inaccuracy the invention proposes a method according to the incipiently type with the features according to the invention as defined by independent claim 1:

> a. measuring a first set-of-sensors-output (SO1) using a first set-of-sensors (SS1) applied to said module (MDL) and
> measuring a second set-of-sensors-output (SO2)

using a second set-of-sensors (SS2) applied to said module (MDL),

b. deducing a transfer function (TRF) with a main transfer-function matrix (MTM) of said module (MDL) on basis of said set-of-sensors-outputs (SO2, SO1), wherein said transfer-function matrix (MTM) is a quadratic n-dimensional matrix for said n degrees of freedom (DOF), wherein each degree of freedom (DOF) is assigned to a specific one of the n dimensions (NDM),

c. selecting a submatrix (SBM) either as the complete main transfer-function matrix (MTM) or subdividing said transfer-function matrix (TRM) in at least two submatrices (SBM) each being assigned to a specific range of said degrees of freedom (DOF) and selecting one of these submatrices (SBM),

d. determining for said selected submatrix (SBM) a corresponding rotational matrix (RTM) which improves the symmetry of the submatrix (SBM),

e. generating a main rotational matrix (MRM) to transform said main transfer-function matrix (MTM), wherein said main rotational matrix (MRM) comprises said rotational matrix (RTM) such that the range of said degrees of freedom (DOF) of said respective submatrix (SBM) corresponds to said rotational submatrix (RTM) and transforms the corresponding degrees of freedom (DOF) in said main transfer-function matrix (MTM) into a transformed transfer-function matrix (TTM),

f. providing the transfer function (TRF) with said transformed transfer-function matrix (TTM) substituting said main transfer-function matrix (MTM).

The process according to the invention also relies on some basic linear algebra facts, like:

- a symmetric matrix is a square matrix that is equal to its transpose. Further, the invention relies on the fact
- that every square real matrix can be written as a product of two real symmetric matrices, and every square complex matrix can be written as a product of two complex symmetric matrices (Jordan normal form),
- that every real non-singular matrix can be uniquely factored as the product of an orthogonal matrix and a symmetric positive definite matrix, which is called a polar decomposition
- that every real positive-definite symmetric matrix is a product of a lower-triangular matrix and its transpose (Cholesky decomposition).

The invention applies these mathematical facts in a specific manner to solve the technical problem of correcting Euler angle misalignment of sensors without hardware modifications. With the method according to the invention, inaccuracy resulting from Euler angle misalignment are minimized and the resulting transfer functions are made feasible to obtain accurate transfer functions by assembly by method of FBS of module transfer functions to a complete component transfer function.

The dependent claims describe advantageous developments and modifications of the invention.

One preferred embodiment provides a method according to the above description, with the additional step of:

g. repeating steps c. - f. to further improve symmetry of said main transfer-function matrix (MTM) until a predefined criterium (CRT) is met.

The repetition of selecting a submatrix and symmetry improvement may add additional accuracy to the transfer-function matrix (MTM) in particular when being inverted during assembly of several transfer-functions of each module to obtain a component transfer-functions.

Another preferred embodiment provides a method according to the above description, wherein step c of selecting a submatrix (SBM) during at least the first run is selecting a submatrix with their diagonal along the diagonal of said main transfer-function matrix (MTM). This selection strategy is efficient since the resulting process is stable and the accuracy improvement is reliable.

Another preferred embodiment provides a method according to the above description, wherein step c of selecting a submatrix (SBM) is selecting first submatrices with their diagonal along the diagonal of said main transfer-function matrix (MTM) until the diagonal of said main transfer-function matrix (MTM) is at least completely selected once. This option makes use of more degrees of freedom to improve accuracy.

Another preferred embodiment provides a method according to the above description, wherein step c of selecting a submatrix (SBM) first is selecting submatrices with their diagonal not along the diagonal of said main transfer-function matrix (MTM). This method may be a fast option, wherein these 'mixed' degree of freedom matrix components may improve the overall accuracy of the transfer function regarding the degrees of freedom involved in such submatrix selection within one symmetry improvement step.

Said first set of sensors may be measuring a force-parameter, preferably comprise or consist of at least one of a piezoelectric sensor or strain-gauge sensor or the like.

Said second set of sensors may be measuring vibration (most preferably 3 degree of freedom vibrational responses), preferably comprise or consist of at least one of ceramic piezoelectric sensor, an accelerometer, an optical vibrometer or the like. Said accelerometer may be a sensor that measures the dynamic acceleration of a physical device as a voltage. Using optical laser probes may be advantageous when having light structure devices or in case of problems physically contacting the device.

One important understanding underlying the invention is that the misalignment of the Euler angles of

the exciters and sensors (shaker, accelerometer, etc.) poses a significant threat to the overall quality of the FRFs and an even more significant problem for the accuracy of the FBS-synthesized FRFs. The invention determined that one reason for said sensitivity may lie in an error amplification effect like that a 5% of error in a single module FRF, e.g. a tire FRF, may result in more than 10% change in a two-module-component FRF based on the coupling of e.g. two module FRFs. Consequently, Euler angle alignment requires a higher order of accuracy which implies that even the most experienced engineers cannot satisfy sensor alignment accuracy requirements to obtain FRFs accurate enough for FBS-synthesis.

**[0017]** The preferred field of application of the invention may be structural coupling through FBS. The termination used often in this document refers to transfer functions. These transfer functions may preferably be frequency response functions which is considered the more specific term. Modal analysis may be an additional field that could profit from the technology described herewith.

**[0018]** The invention may preferably be used when determining a transfer function respectively a frequency response function of a component comprising several modules by frequency based substructuring, wherein in said component at least two modules are combined, comprising the steps of:

- determining a transfer function of a module applying a method according to the preceding description and to the claims and
- coupling the obtained transfer functions and generating a component transfer function respectively frequency response function.

**[0019]** Method steps or sets of method steps according to the invention may be performed repeatedly preferably in a recursive manner (successive results respectively are based on at least the preceding result) to improve accuracy of the results.

**[0020]** Further the invention relates to a computer implemented method of generating a component comprising the method according to the preceding description and to the claims. The method preferably may comprise:

defining a should-state of a transfer function of said component,

selecting at least one design parameter of a module of said component to be changed to influence the transfer function of said component,

performing and/or repeating the following process steps (I). - (IV). for said selected design parameter(s) until said transfer function of said component complies with the should-state:

(I). selecting one of said selected design parameter(s),

(II). performing said method of determining a transfer function of a component by frequency based substructuring (according to claim 9),

(III). changing said selected design parameter and performing the method of determining a transfer function of a component by frequency based substructuring (according to claim 9) with the changed design parameter,

(IV). comparing the transfer functions of the component before and after changing said design parameter,

generating said component with changed design parameters.

**[0021]** Further, the invention relates to a computer-system being adapted to carrying out a method of the above defined type.

**[0022]** Further, the invention relates to a computer-readable medium encoded with executable instructions, that when executed, cause the above referenced computer system to carry out a method according to the invention.

**[0023]** In general, a computer-implemented method according to the invention is one which involves the use of a computer, computer network or other programmable apparatus, where one or more features are realized wholly or partly by means of a computer program. Every method step according to the invention which may be understood in the light of the description or the claims by a person with ordinary skill in the art to be done as a computer-implemented step may be considered as a computer-implemented step of the method. The computer-implemented method may contain some steps to be done without the computer.

**[0024]** Advantageous configurations and embodiments of the method according to the invention follow from the claims as well as aspects of the following descriptions.

## BRIEF DESCRIPTION OF THE DRAWINGS

**[0025]** Embodiments of the invention are now described, by way of example only, with reference to the accompanying drawings, of which:

- Figure 1 shows a schematic diagram illustrating the method-steps according to the invention and the system according to the invention;
- Figure 2 compares diagrams of an uncorrected transfer function and corrected transfer function (respectively level and phase);
- Figure 3 illustrates schematically Frequency Based Substructuring [FBS];
- Figure 4 schematically illustrates the method of generating a component according to the invention.

**[0026]** The illustration in the drawings is in schematic form respectively. It is noted that in different figures, sim-

ilar or identical parameters may be provided with the same reference signs.

DESCRIPTION OF THE DRAWINGS

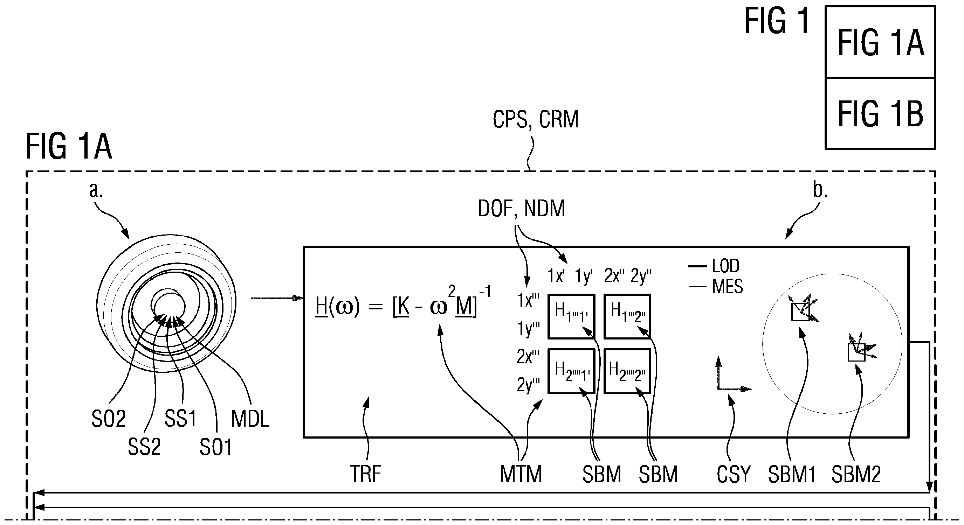

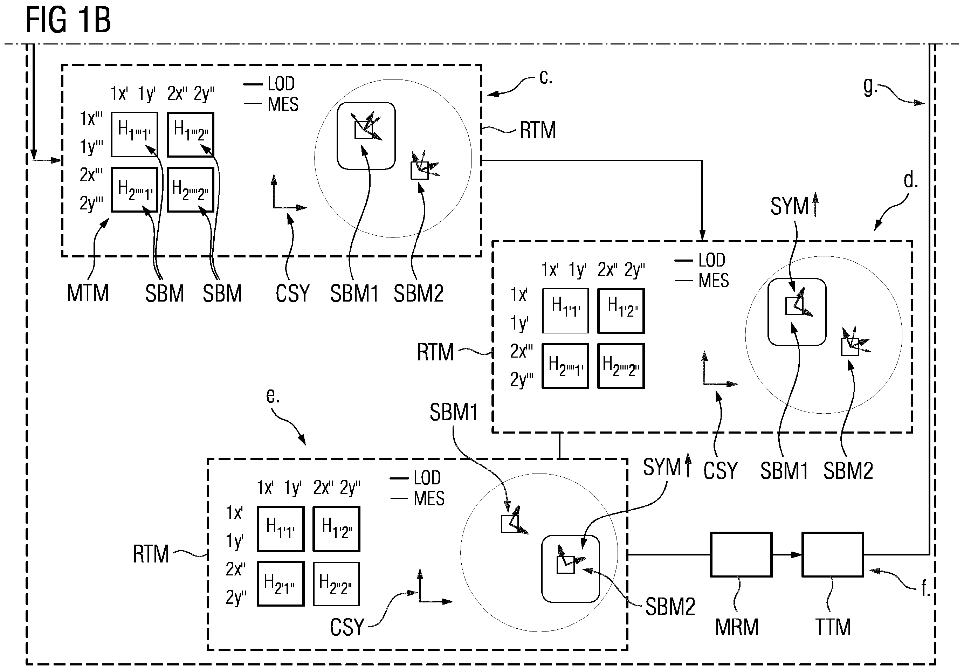

Figure 1 shows a schematic illustration of the method-steps according to the invention as well as a computer-system CPS and a computer readable medium CRM encoded with executable instructions, that when executed, cause the computer system CPS (according to claim 11) to carry out a method according to the invention. The computer system CPS may be a personal computer, a computer network comprising computational resources or a mobile device or similar means.

Figure 1 illustrates the computer system CPS carrying out said computer implemented method of determining a transfer function TRF of a module MDL comprising the steps:

a. measuring a first set-of-sensors-output SO1 using a first set-of-sensors SS1 applied to said module MDL and measuring a second set-of-sensors-output SO2 using a second set-of-sensors SS2 applied to said module MDL,

b. deducing a transfer function TRF with a main transfer-function matrix MTM of said module MDL on basis of said set-of-sensors-outputs SO2, SO1, wherein said transfer-function matrix MTM is a quadratic n-dimensional matrix for said n degrees of freedom DOF, wherein each degree of freedom DOF is assigned to a specific one of the n dimensions NDM,

c. selecting a submatrix SBM either as the complete main transfer-function matrix MTM or subdividing said transfer-function matrix TRM in at least two submatrices SBM each being assigned to a specific range of said degrees of freedom DOF and selecting one of these submatrices SBM (CSY illustrates a global coordinate system, wherein for each submatrix SBM (e.g. SBM1, SBM2) load (LOD) and measurement (MES) coordinate systems are illustrated, which are first misaligned to each other and afterwards aligned to each other as an effect of the method according to the invention),

d. determining for said selected submatrix SBM a corresponding rotational matrix RTM which improves the symmetry SYM of the submatrix SBM,

e. generating a main rotational matrix MRM to transform said main transfer-function matrix MTM, wherein said main rotational matrix MRM comprises said rotational matrix RTM such that the range of said degrees of freedom DOF of said respective submatrix SBM corresponds to said rotational submatrix RTM and transforms the corresponding degrees of freedom DOF in said main transfer-function matrix MTM into a transformed transfer-function matrix TTM,

f. providing the transfer function TRF with said transformed transfer-function matrix TTM substituting said main transfer-function matrix MTM.

As a step g. the steps c. - f. may be repeated to further improve symmetry of said main transfer-function matrix MTM until a predefined criterium CRT is met.
During step c of selecting a submatrix SBM at least during the first run a submatrix SBM may be selected with their diagonal along the diagonal of said main transfer-function matrix MTM. The step-c-selection of selecting a submatrix SBM along the diagonal of said main transfer-function matrix MTM may be continued until the diagonal of said main transfer-function matrix MTM is at least completely selected once.
Alternatively step c may be first selecting a submatrix SBM which' s diagonal does not belong to the diagonal of said main transfer-function matrix MTM.

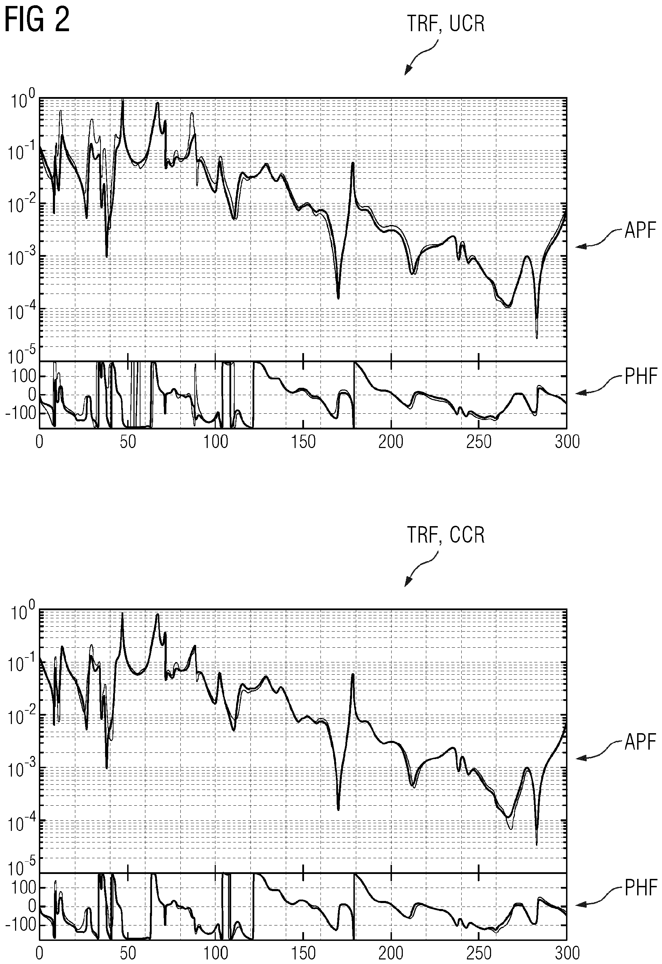

Figure 2 shows the uncorrected UCR transfer function TRF in the upper part and the corrected CCR transfer function TRF (both being a frequency response function FRF) in the lower part respectively, an amplitude-function APF and the phase-function PHF of the frequency. The corrected transfer function TRF shows a smaller deviation between the measurements of the single sensors.

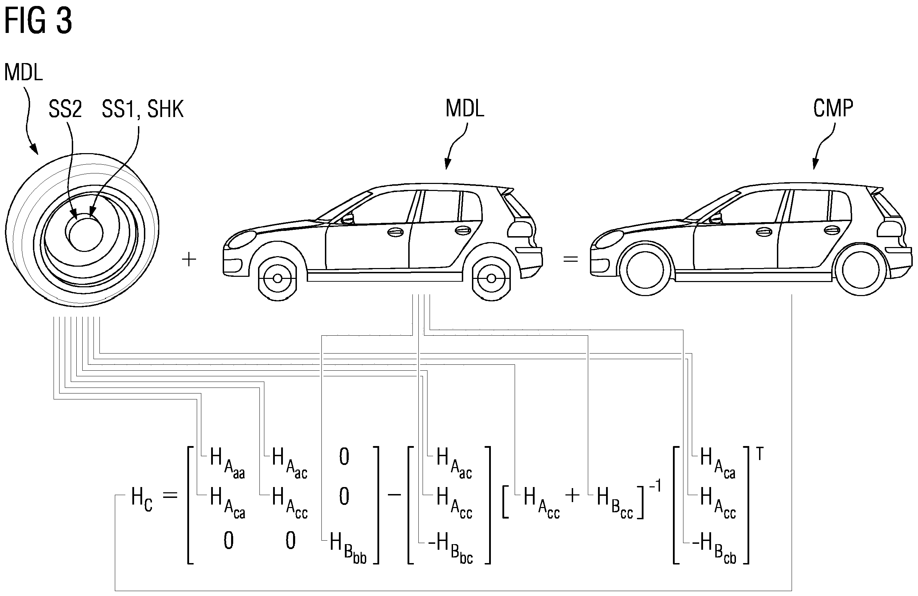

Figure 3 illustrates schematically Frequency Based Substructuring [FBS] combining two modules MDL (four tires = first module MDL, the rest of the vehicle without tires = second module MDL) to result in the complete component CMP. The first module MDL respectively the tires are equipped with the second set of sensors SS2, and a shaker SHK (shaker may preferably be located around the tire wheel center) comprises a first set of sensors SS1. For example, the second set of sensors may comprise nine accelerometers to monitor the vibrations caused by the shaker SHK. Since the tire center does physically not exist due to the hole for the vehicle-axle the sensors of the second set of sensors SS2 are normally arranged around the hole. The second module MDL of the component CMP may be equipped with sensors sets, too, and the method according to the invention may be applied there as well. The overall transfer function TRP is a frequency response function FRF and may be obtained by combining the two transfer functions TRP of the modules MDL involved, as illustrated below the pictures of the vehicle respectively the tire as an equation of matrices. The contributions of the single transfer functions TRP of the respective modules MDL to the transfer function TRF of the complete component CMD is indicated by lines drawn between the respective module MDL and the matrix equation elements below the pictures (tire parameters are indicated by subscripted 'A', rest-vehicle parameters are indicated by subscripted 'B', component parameters are indicated by subscripted 'C'). When combining the single transfer functions TRP it becomes necessary to make a matrix inversion (circled term) which leads to error-amplification. If the single transfer functions TRP of the modules MDL to be combined are not sufficiently accurate, the error amplification may lead to inacceptable results. In this context the correct Euler angle alignment is essential, and the correction introduced by the invention of high importance.

An effect of the method according to the invention is a correction of the Euler angles Θ of the sensors of the sensor sets SS1, SS2 which may not be aligned identically during measurement. This misalignment may affect the transfer functions of the respective modules since excitation and response do not harmonize to each other. A frequency based substructuring approach which requires matrix inversion conventionally amplifies the misalignment problems. The method according to the invention repairs this issue and enables good accuracy of assembled transfer functions of components made from module transfer functions.

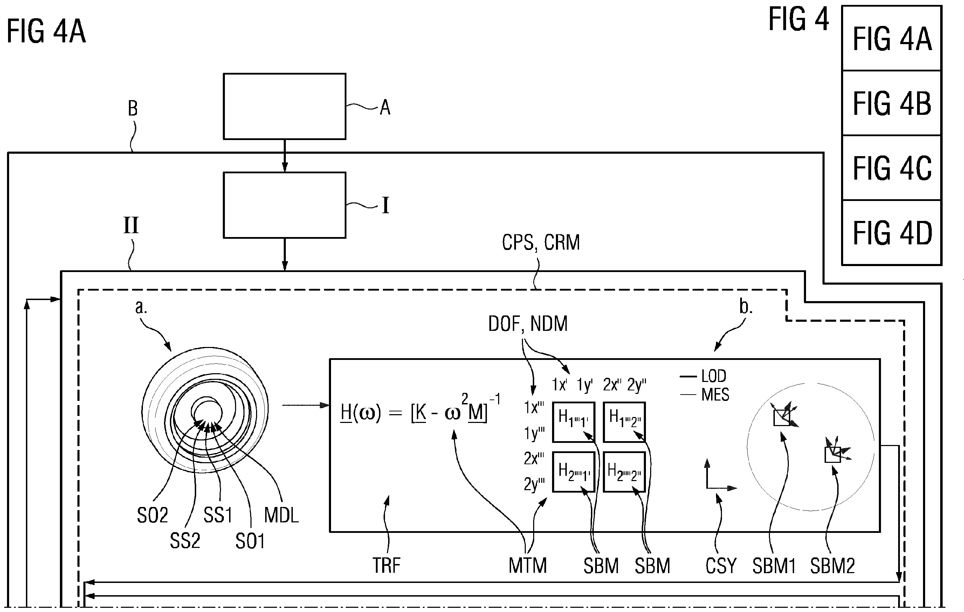

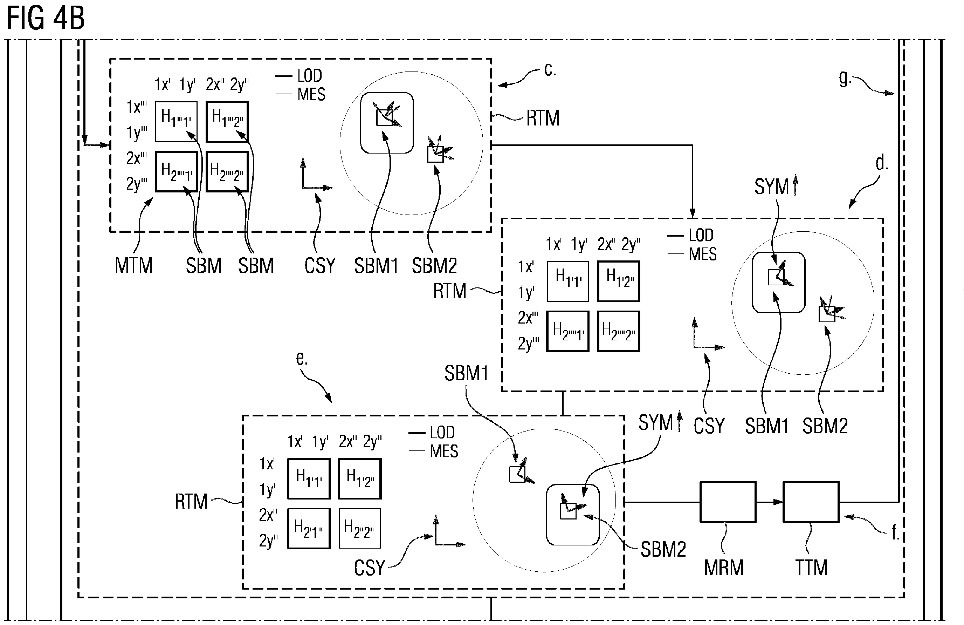

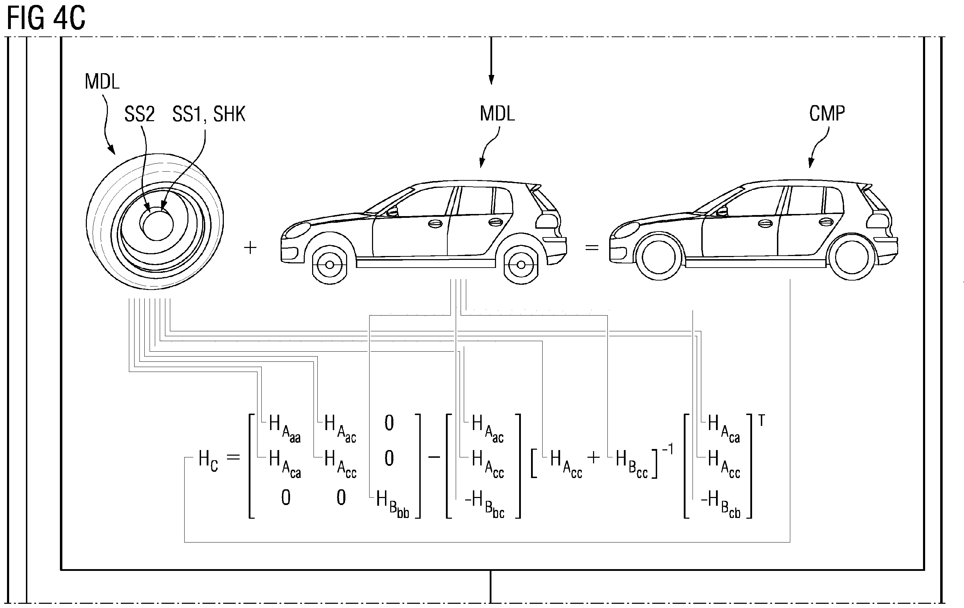

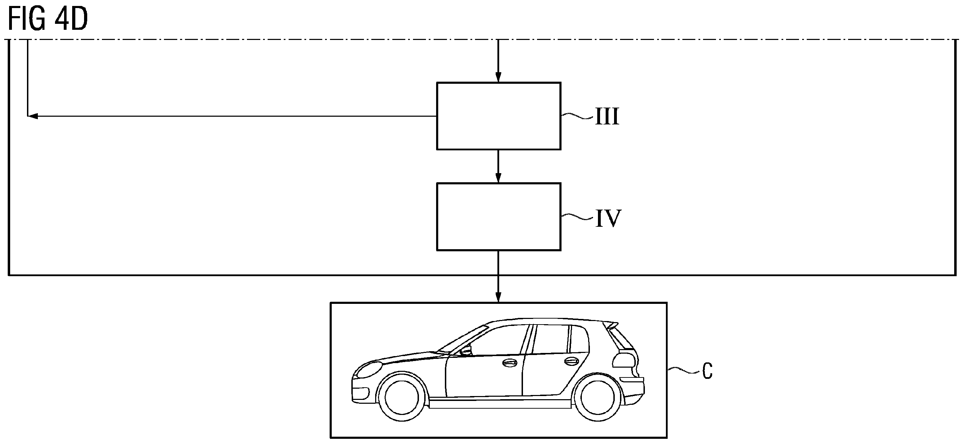

Figure 4 schematically illustrates a computer implemented method of generating a component CMP according to the invention. Initially a should-state of a transfer function of said component may be defined, like low noise in a vehicles compartment when driving along a specific road paving roughness.

In a step A. at least one design parameter of a module MDL of said component CMP to be changed to influence the transfer function of said component CMP is selected.

During step B. the following process steps (I). - (IV) are performed or repeated for said selected design parameter (s) until said transfer function of said component CMP complies with the predefined should-state:

(I). selecting one of said selected design parameter(s),

(II). performing the method according to claim 9 respectively according to figure 1,

(III). changing said selected design parameter and performing the method according to claim 9 respectively according to figure 1 with the changed design parameter,

(IV). comparing the transfer functions of the component CMP before and after changing said design parameter.

During a final step C. said component with changed design parameters is generated.

Although the present invention has been described in detail with reference to the preferred embodiment, it is to be understood that the present invention is not limited by the disclosed examples but by the scope defined by the claims, and that numerous additional modifications and variations could be made thereto by a person skilled in the art without departing from the scope of the invention defined by the independent claims.

It should be noted that the use of "a" or "an" throughout this application does not exclude a plurality, and "comprising" does not exclude other steps or parameters. Also, parameters described in association with different embodiments may be combined. It should also be noted that reference signs in the claims should not be construed as limiting the scope of the claims.

**Claims**

1. Computer implemented method of determining a transfer function (TRF) of a module (MDL) of n degrees of freedom comprising the steps:

a. measuring a first set-of-sensors-output (SO1) using a first set-of-sensors (SS1) applied to said module (MDL) and measuring a second set-of-sensors-output (SO2) using a second set-of-sensors (SS2) applied to said module (MDL),

b. deducing a transfer function (TRF) with a main transfer-function matrix (MTM) of said module (MDL) on basis of said set-of-sensors-outputs (SO2, SO1), wherein said transfer-function matrix (MTM) is a quadratic n-dimensional matrix for said n degrees of freedom (DOF), wherein each degree of freedom (DOF) is assigned to a specific one of the n dimensions (NDM),

c. selecting a submatrix (SBM) either as the complete main transfer-function matrix (MTM) or subdividing said transfer-function matrix (TRM) in at least two submatrices (SBM) each being assigned to a specific range of said degrees of freedom (DOF) and selecting one of these submatrices (SBM),

d. determining for said selected submatrix (SBM) a corresponding rotational matrix (RTM) which improves the symmetry of the submatrix (SBM),

e. generating a main rotational matrix (MRM) to transform said main transfer-function matrix (MTM), wherein said main rotational matrix (MRM) comprises said rotational matrix (RTM) such that the range of said degrees of freedom (DOF) of said respective submatrix (SBM) corresponds to said rotational submatrix (RTM) and transforms the corresponding degrees of freedom (DOF) in said main transfer-function matrix (MTM) into a transformed transfer-function matrix (TTM),

f. providing the transfer function (TRF) with said transformed transfer-function matrix (TTM) substituting said main transfer-function matrix (MTM).

2. Method according to claim 1, comprising the additional steps of:
g. repeating steps c. - f. to further improve symmetry of said main transfer-function matrix (MTM) until a predefined criterium (CRT) is met.

3. Method according to claim 2, wherein step c of selecting a submatrix (SBM) during at least the first run is selecting a submatrix with their diagonal along the diagonal of said main transfer-function matrix (MTM).

4. Method according to claim 3, wherein step c of selecting a submatrix (SBM) is selecting first submatrices with their diagonal along the diagonal of said main transfer-function matrix (MTM) until the diagonal of said main transfer-function matrix (MTM) is at least completely selected once.

5. Method according to claim 1 or 2, wherein step c of selecting a submatrix (SBM) first is selecting submatrices with their diagonal not along the diagonal of said main transfer-function matrix (MTM).

6. Method according to at least one of the preceding claims, wherein said second set-of-sensors (SS2) comprises vibration sensors (VBS) and wherein said second set-of-sensors-output (SO2) comprises vibration characteristics.

7. Method according to at least one of the preceding claims, wherein said first set-of-sensors (SS1) comprises force sensors (FRS) and wherein said first set-of-sensors-output (SO1) comprises excitation force characteristics.

8. Method according to at least one of the preceding claims, wherein said transfer function is a frequency response function (FRF).

9. Computer implemented method of determining a transfer function of a component (CMP) by frequency based substructuring (FBS), wherein in said component (CMP) at least two modules (MDL) are combined, comprising the steps

   - determining a transfer function of a module (MDL) according to a method according to at least one of the preceding claims,
   - coupling transfer functions of said modules (MDL) of said component (CMP) obtaining a component transfer function.

10. Computer implemented method of generating a component (CMP) comprising the method according to claim 9, defining a should-state of a transfer function of said component,

   A. selecting at least one design parameter of a module (MDL) of said component (CMP) to be changed to influence the transfer function of said component (CMP),
   B. performing and/or repeating the following process steps (I). - (IV). for said selected design parameter(s) until said transfer function of said component (CMP) complies with the should-state:

   (I). selecting one of said selected design parameter(s),
   (II). performing the method according to claim 9,
   (III). changing said selected design parameter and performing the method according to claim 9 with the changed design parameter,
   (IV). comparing the transfer functions of the component (CMP) before and after changing said design parameter,

   C. generating said component with changed design parameters.

11. Computer-system (CPS) being adapted to carrying out a method according to at least one of preceding claims 1 - 10.

12. A computer-readable medium (CRM) encoded with executable instructions, that when executed, cause the computer system (CPS) according to claim 11 to carry out a method according to any one of claims 1 to 10.

FIG 1

| FIG 1A |
|--------|
| FIG 1B |

FIG 1A

CPS, CRM

DOF, NDM

a.

b.

$$\underline{H}(\omega) = [\underline{K} - \omega^2 \underline{M}]^{-1}$$

|  | 1x' 1y' | 2x'' 2y'' |
|---|---|---|
| 1x''' 1y''' | $H_{1'''1'}$ | $H_{1'''2''}$ |
| 2x''' 2y''' | $H_{2'''1'}$ | $H_{2'''2''}$ |

— LOD
— MES

SO2    SS1    MDL
SS2    SO1

TRF        MTM    SBM    SBM    CSY    SBM1    SBM2

EP 4 089 551 A1

FIG 1B

EP 4 089 551 A1

# FIG 2

TRF, UCR

TRF, CCR

# FIG 3

MDL

SS2  SS1, SHK

MDL

CMP

$+$ ... $=$

$$H_C = \begin{bmatrix} H_{A_{aa}} & H_{A_{ac}} & 0 \\ H_{A_{ca}} & H_{A_{cc}} & 0 \\ 0 & 0 & H_{B_{bb}} \end{bmatrix} - \begin{bmatrix} H_{A_{ac}} \\ H_{A_{cc}} \\ -H_{B_{bc}} \end{bmatrix} \begin{bmatrix} H_{A_{cc}} + H_{B_{cc}} \end{bmatrix}^{-1} \begin{bmatrix} H_{A_{ca}} \\ H_{A_{cc}} \\ -H_{B_{cb}} \end{bmatrix}^{T}$$

EP 4 089 551 A1

FIG 4

| FIG 4A |
| FIG 4B |
| FIG 4C |
| FIG 4D |

FIG 4A

A

B

I

II

CPS, CRM

DOF, NDM

$\underline{H}(\omega) = [\underline{K} - \omega^2 \underline{M}]^{-1}$

TRF

1x' 1y' 2x'' 2y''

1x''' 1y''' 2x'''' 2y''''

$H_{1'''1'}$  $H_{1'''2'}$

$H_{2'''1'}$  $H_{2'''2'}$

MTM   SBM   SBM

— LOD
— MES

b.

CSY   SBM1   SBM2

a.

MDL
SO1
SS1
SS2
SO2

FIG 4B

# FIG 4C

$$H_C = \begin{bmatrix} H_{A_{aa}} & H_{A_{ac}} & 0 \\ H_{A_{ca}} & H_{A_{cc}} & 0 \\ 0 & 0 & H_{B_{bb}} \end{bmatrix} - \begin{bmatrix} H_{A_{ac}} \\ H_{A_{cc}} \\ -H_{B_{bc}} \end{bmatrix} \begin{bmatrix} H_{A_{cc}} + H_{B_{cc}} \end{bmatrix}^{-1} \begin{bmatrix} H_{A_{ca}} \\ H_{A_{cc}} \\ -H_{B_{cb}} \end{bmatrix}^T$$

EP 4 089 551 A1

FIG 4D

**EP 4 089 551 A1**

## EUROPEAN SEARCH REPORT

Application Number

EP 21 17 3273

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AIT RIMOUCH H ET AL: "A contribution to the resolution of structural dynamics problems using frequency response function matrix", J. MATER. ENVIRON. SCI, vol. 9, no. 9, 2018, pages 2558-2566, XP055856432, ISSN: 2028-2508 Retrieved from the Internet: URL:https://www.jmaterenvironsci.com/Document/vol9/vol9_N9/281-JMES-3786-Ait%20Rimouch.pdf> * section 3.2.2 * | 1-12 | INV. G06F17/11 G01H17/00 G01M7/00 |
| X,D | Bianciardi Fabio ET AL: "Road Noise assessment using component-based TPA for a tire assembly", Conference paper, October 2018 (2018-10), pages 1-7, XP055856429, Retrieved from the Internet: URL:https://www.researchgate.net/profile/Patrick-Corbeels/publication/328364904_Road_Noise_assessment_using_component-based_TPA_for_a_tire_assembly/links/5bc89f8aa6fdcc03c7907eb9/Road-Noise-assessment-using-component-based-TPA-for-a-tire-assembly.pdf [retrieved on 2021-10-29] * page 2 - page 3 * | 1-12 | |

TECHNICAL FIELDS SEARCHED (IPC)

G06F
G01M
G01H

-/--

The present search report has been drawn up for all claims

| Place of search | Date of completion of the search | Examiner |
|---|---|---|
| Berlin | 29 October 2021 | Huguet Serra, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

page 1 of 2

17

Europäisches Patentamt

European Patent Office

Office européen des brevets

## EUROPEAN SEARCH REPORT

Application Number

EP 21 17 3273

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Venugopal Harikrishnan: "Component-Based Transfer Path Analysis and Hybrid Substructuring at high frequencies", DEGREE PROJECT IN INDUSTRIAL ENGINEERING AND MANAGEMENT, 5 October 2020 (2020-10-05), pages 1-110, XP055854340, STOCKHOLM, SWEDEN Retrieved from the Internet: URL:http://www.diva-portal.se/smash/get/diva2:1473176/FULLTEXT01.pdf [retrieved on 2021-10-25] * section 3.5 * | 1-12 | |
| A,D | CHIRAG JAGADISH ET AL: "Diversified redundancy in the measurement of Euler angles using accelerometers and magnetometers", PROCEEDINGS OF THE 46TH IEEE CONFERENCE ON DECISION AND CONTROL : NEW ORLEANS, LA, 12 - 14 DECEMBER 2007, IEEE, PISCATAWAY, NJ, USA, December 2007 (2007-12), pages 2669-2674, XP031205427, DOI: 10.1109/CDC.2007.4434730 ISBN: 978-1-4244-1497-0 * the whole document * | 1-12 | TECHNICAL FIELDS SEARCHED (IPC) |

The present search report has been drawn up for all claims

| Place of search | Date of completion of the search | Examiner |
|---|---|---|
| Berlin | 29 October 2021 | Huguet Serra, G |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. CUPPENS ; P. SAS ; L. HERMANS.** *Evaluation of the FRF based substructuring and modal synthesis technique applied to vehicle FE data,* January 2000
- **F. BIANCIARDI ; J. ORTEGA ALMIRON ; E. RISALITI ; P. CORBEELS.** *Road Noise assessment using component-based TPA for a tire,* 2018
- **CHIRAG JAGADISH ; BOR-CHIN CHANG.** *Diversified redundancy in the measurement of Euler angles using accelerometers and magnetometers,* 2007